# EUROPEAN PATENT SPECIFICATION

(11) **EP 2 725 513 B1**
(45) Date of publication and mention of the grant of the patent: **19.12.2018**
(21) Application number: 12189805.0
(22) Date of filing: 24.10.2012
(51) Int. Cl.: G06F 21/60

(54) **Managing permission settings applied to applications**
Verwaltung von Berechtigungseinstellungen, die auf Anwendungen angewandt werden
Gestion des réglages d'autorisations appliquée à des applications

(43) Date of publication of application: 30.04.2014
(73) Proprietor: BlackBerry Limited, Waterloo, ON N2K 0A7 (CA); 2236008 Ontario Inc., Waterloo, ON N2K 0A7 (CA)
(72) Inventor: Schieman, Adam Richard, Mississauga, Ontario, L4W 0B5 (CA); Major, Daniel Jonas, Kanata, Ontario, K2K 0B3 (CA); Goodman, Kevin, Kanata, Ontario, K2K 0B3 (CA); Nagarajan, Sivakumar, Kanata, Ontario, K2K 0B3 (CA)
(74) Representative: Gill Jennings & Every LLP

(56) References cited:
- WO-A1-2009/021200
- US-A1- 2009 260 052
- US-B1- 7 751 331

## Description

### BACKGROUND

This disclosure relates to managing permission settings applied to applications on a device. Many communication devices include data, applications, and network resources whose accessibility is controlled by permission settings. For example, user accounts, administration rights, database management, and others may be managed by with permission settings.

US 2009/0260052 describes an inter-process messaging security management system and method for controlling delivery of messages between different processes by confirming that delivery of a particular message is permitted by an existing security policy before delivering the message, and denying delivery if no security policy permits such a delivery.

### DESCRIPTION OF THE DRAWINGS

FIG. 1 is a schematic diagram showing an example data communication system.
FIG. 2 is a diagram showing an example mobile device.
FIG. 3 is a schematic diagram showing example uses of resources on a mobile device.
FIG. 4 is a flow chart showing an example process for managing permission settings applied to applications on a mobile device.

Like reference numbers and designations in the various drawings indicate like elements.

### DETAILED DESCRIPTION

Perimeters, as used in the present disclosure, generally refer to groups of resources having a common management scheme, and each perimeter generally includes one or more resources and one or more policies regarding use of or access to the one or more resources. Perimeters may be implemented on data communication systems that include a device, and can be used to logically separate information (e.g., files, applications, certificates, configuration data, network connections, data, and the like) on the device. For example, the device can implement two or more perimeters, which can include a personal perimeter, an enterprise or work perimeter, any suitable combination of these and other types of perimeters. In some embodiments, the device may include multiple personal perimeters, multiple enterprise perimeters, or both. A personal perimeter can be managed by a device user, and an enterprise perimeter can be managed by an enterprise or corporate administrator. In some implementations, the enterprise or corporate administrator can additionally manage the personal perimeter or the device or both. A device purchased, owned, or otherwise provided by an enterprise, employer or corporation may generally be referred to as a corporate-liable device, while a device purchased, owned or otherwise provided by an employee or individual may generally be referred to as a personal-liable device or an individual-liable device.

In some implementations, each perimeter on a device has its own file system on the device, and separation between perimeters can be provided, at least partially, by the separation of the file systems on the device. In some cases, some of the resources of each perimeter (*e.g*., data and policies) are stored in a dedicated file system for the perimeter, while other resource of each perimeter (*e.g*., applications) are stored outside of the dedicated file system.

Separation of file systems can be logical, physical, or both. A physical separation of file systems can be implemented, for example, by designating physically separate memory locations (*e.g*., separate memory devices, or separate blocks in the same memory) for each file system. A logical separation of file systems can be implemented, for example, by designating logically separate data structures (*e.g*., separate directories, etc.) for each file system. In some implementations, each file system has its own encryption parameters. For example, the file system for a corporate perimeter can have its own encryption key and a higher encryption strength, while a file system for a personal perimeter can have its own encryption key and lower encryption strength. In some instances, the file system for the personal perimeter has the same encryption strength as the corporate perimeter, or the file system for the personal perimeter can be unencrypted.

As described above, a perimeter can include a group of resources that share a common management scheme governing the use of resources in the group and can encompass both the resources and the management policies that describe how the resources may be used. The management policies can include security restrictions, which are defined for the perimeter. Applications executable by the device can include resources that, when executed, request access to other resources or provide resources to other applications (or both). For an application that is assigned to or associated with a perimeter, resources included in the application can be included in the group of resources included in the perimeter. Further, security restrictions defined for the perimeter can restrict the application to resources included in the group. Thus, when the application is executed within the perimeter, security restrictions included in the management policies of the perimeter can determine whether or not the resources associated with the application can access other resources, such as resources included in the group or resources outside the group (or both), or grant access to other applications, such as applications assigned to or associated with or not assigned to or associated with the perimeter (or both).

When a resource (*e.g*., an application) is "launched into" a perimeter, an instance of the application is instantiated in the perimeter. The management policy of the perimeter where an application is launched can determine, at least partially, what resources (*e.g*., data resources, network resources, etc.) the application can access or execute. As such, when an instance of application is running in a perimeter, permissions for the instance of the application are determined based at least partially on the management policy of the perimeter. For some applications, access to resource outside a perimeter can be determined, at least partially, based on the policies of the other perimeter.

In some implementations, a secure perimeter can divide or segregate different categories of data (*e.g*., work data, personal data, etc.) from the operating system level all the way to the user interface. As such, the perimeter architecture can provide protection of data at the operating system level, the file level, the user interface level, and other levels of the device. A secure perimeter can, in some cases, ensure a complete separation between the different categories of data, applications and the user experience, while at the same time also allowing the different categories of data to coexist in the same application and share data when desired. A secure perimeter can allow for "hybrid apps," such as, for example, a unified inbox showing both personal and corporate email. In some instances, applications can be limited to an individual perimeter view (*e.g.,* a "work" or "personal" perimeter view). For example, a social networking application can be configured to appear only in the personal perimeter. In some instances, separate instances of the same application can run in multiple perimeters. For example, a device can have an instance of a social networking application (*e.g*., Facebook, Twitter, etc.) running in a personal perimeter for a user's personal account, and the device can have an instance of the same social networking application running in a corporate perimeter for the user's company or the user's corporate account.

A data communication system can include a user device, for example, a mobile device, that provides multiple computer software applications. Providing an application can include execution of one or more actions, for example, by the device. The actions can include installation actions to install the application on the device, execution actions to execute the application, data access actions to enable the application to access data stored on the device or to enable other applications to access data associated with the application (or combinations of them), uninstallation actions to uninstall the application from the device, and the like. The application can be associated with permissions that define whether or not the device can perform one or more of the actions.

The permissions can be defined (for example, granted) by several management sources or policies (or both) such as, for example, a vendor who provides the application, users of the device, an enterprise, a perimeter with which the application is associated, and the like. A perimeter can be implemented on the device and can be used to logically separate information (for example, data, applications, network resources, and the like). The perimeter can be a personal perimeter, an enterprise perimeter, or any suitable combination of these and other types of perimeters. The personal perimeter and the enterprise perimeter can be managed by, and consequently associated with, respective management policies of users of the device and corporate administrators, respectively.

In some implementations, permissions for an application indicate what actions the application is authorized to do on a device. For example, permissions for an application can indicate types of data resources, network resources, or other resources the application can access, read, write, modify, or execute, or an application can have another type of permission setting. Permissions for an application can include the application's disposition. The disposition of an application can indicate whether the application is permitted on the device. For example, an application can be authorized, unauthorized, or enabled on the device, or the application can have another type of disposition.

In some instances, a permission setting is applied to the application. The permission setting can be determined based on multiple management sources or policies associated with the application or the device that executes the application (or both). In some implementations, multiple management policies that apply to an application associated with a perimeter on a device can be identified. For each of the multiple management policies, a priority ranking can be determined. The priority ranking can be determined based on the perimeter with which the application is associated. Based on the priority rankings for the multiple management policies, a permission setting can be applied to the application. For example, a centralized policy engine can be included in the device to receive permission decisions from the multiple management policies and generate the permission setting that is applied to the application. In one example, the centralized policy engine can receive a user management policy which allows the execution of a Global Positioning System (GPS) application and a parental control management policy which denies execution of the GPS application. The centralized policy engine can determine that the parental control management policy has a higher priority rank than the user management policy, and can accordingly apply a permission setting to the GPS application that disallows the application's execution when requested by a user who defined the user management policy.

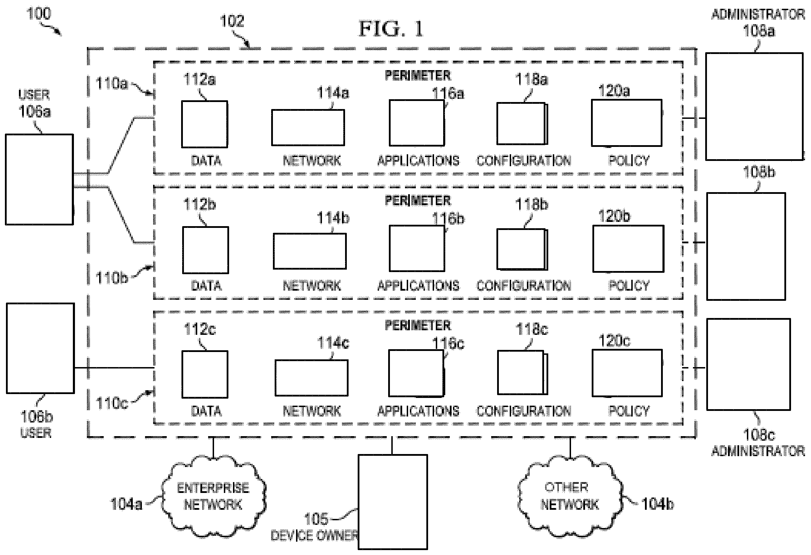

FIG. 1 is a schematic diagram showing an example data communication system 100. The example data communication system 100 includes a device 102, an enterprise network 104a, and one or more other networks 104b. A data communication system may include additional, different, or fewer features, as appropriate. The diagram in FIG. 1 also shows interactions by users 106a, 106b, by a device owner 105, and by administrators 108a, 108b, 108c. In some cases, the device owner 105 can be one of the users 106a or 106b, a business enterprise, or another entity. Additional, different, or fewer entities may interact with a data communication system, as appropriate in various implementations.

The device 102 can be any suitable computing device. Generally, a computing device includes a computer-readable medium and data processing apparatus. The computer-readable medium may include any suitable memory, disc, storage device, or other apparatus configured to store machine-readable information. The computer-readable medium can store instructions that are executable by the data processing apparatus. The data processing apparatus can include any suitable processor, controller, circuitry, or other apparatus configured to perform operations based on machine-readable instructions. The data processing apparatus can include a programmable processor, digital logic circuitry, firmware, or any other suitable device. The computer-readable medium can include a single medium or multiple media, and the data processing apparatus can include a single apparatus or multiple apparatus. The computer-readable medium can be a propagated signal in which the operations described here can be encoded by an encoding process.

The example device 102 is operable to receive requests from the user via a user interface, such as a graphical user interface or any other suitable user interfaces. As shown in FIG. 1, the device 102 is communicably coupled to the enterprise network 104a and to one or more other networks 104b. The example device 102 is operable to receive, transmit, process and store any appropriate data. For example, the device 102 can comprise a smartphone, a tablet computer, a personal computer, a laptop computer, a personal data assistant (PDA), or another type of user device. The device 102 may include an input device, such as a keypad, touch screen, mouse, or other device that can accept information, and an output device (*e.g*., display screen) that conveys information associated with the operation of the resources. Both the input device and output device may include fixed or removable storage media (for example, memory, etc.) to both receive input from and provide output to users through the display.

As shown in FIG. 1, the device 102 includes three example perimeters 110a, 110b, and 110c (individually and collectively referred to as "perimeters 110"). Each perimeter 110 includes data 112, network access resources 114, one or more applications 116, one or more configuration files 118, and one or more policies 120. A perimeter 110 may include only a subset of the illustrated resources, or a perimeter 110 may include additional or different resources.

The example perimeters 110 can logically separate resources (e.g., applications, data, network access resources, configuration files, etc.) such that resources in a given perimeter can, in some instances, be prevented from accessing resources included in a different perimeter. For example, personal resources in one perimeter may be prevented from accessing corporate resources in another perimeter, or vice-versa. In some cases, an enterprise may extend a secured perimeter on a single user device without interfering with the user's personal experience on the same device. The perimeters may also permit cross-perimeter access to resources. Access to perimeter resources may be controlled by defining, assigning or otherwise associating a policy to each perimeter.

A policy for a perimeter can be implemented in any suitable format, using any appropriate information. A policy can specify access to both the external resources (in another perimeter) that can be accessed by internal applications (running in the perimeter) and internal resources that can be accessed by external applications. For example, a given perimeter's policy may identify other perimeters that are accessible, internal resources that are not accessible to other perimeters, or both. A perimeter's policy may identify specific users that can or cannot access specified resources in the perimeter. In some implementations, the policies from both perimeters determine whether cross-perimeter access is granted.

The perimeter architecture enables a logical separation of computing resources such that transferring data between perimeters and accessing resources of other perimeter can be controlled. Resources may include applications, file systems, network access, or other computer resources. In addition to enabling access to resources within a perimeter, the example data communication system 100 may include a policy that identifies specific external resources that a resource in a perimeter may access. The example data communication system 100 may manage a seamless user experience in which the perimeter concept is executed.

A perimeter 110 may include password protection, encryption, and other process for controlling access to resources assigned to the perimeter. A perimeter 110 may be generated by the device owner, a user, an administrator, or others. In some examples, the perimeter 110a may be a personal perimeter created for the user 106a and managed by the user 106a. In some examples, the perimeter 110b may be an enterprise perimeter created by an administrator 108b for an enterprise and may be managed by a remote management server. In addition, a given perimeter may be accessed by the device owner 105, a user, an administrator, or any suitable combination. In some implementations, each perimeter may be associated with a single user, and at least some users may access multiple device perimeters. For example, the first user 106a may access resources within both the perimeter 110a and the perimeter 110b, and the second user 106b may have access to only one perimeter 110c.

In some instances, individual perimeters may be added, deleted, or modified. The device owner 105 may have the ability to add or remove individual perimeters 110 from the device 102. In some implementations, a user can create a perimeter. In some instances, an organization associated with the enterprise network 104a can send the device information identifying the initial resources (*e.g*., applications, policies, configurations, etc.) for a new perimeter. A perimeter administrator may assign policies for the perimeters and initiate perimeter updates. In some implementations, perimeter administrators can remotely lock or wipe a perimeter.

Information may be stored on the device 102 in any suitable memory or database module. Example memories include volatile and non-volatile memory, magnetic media, optical media, random access memory (RAM), read-only memory (ROM), removable media and others. The data 112 can include any suitable information. The device 102 can store various objects, including files, classes, frameworks, backup data, business objects, jobs, web pages, web page templates, database tables, repositories storing business or dynamic information, and any other appropriate information including any parameters, variables, algorithms, instructions, rules, constraints, or references thereto. The data 112 may include information that is associated with an application, a network, a user, and other information.

The network access resources 114 can include any suitable parameters, variables, policies, algorithms, instructions, settings, or rules for granting access to networks. For example, the network access resources 114a may include or identify firewall policies for accessing the enterprise network 104a. As another example, the network access resources 114b may include or identify account data for accessing one or more of the other networks 104b. In some implementations, network access resources include or otherwise identify one or more of the following: a username; a password; a security token; a Virtual Private Network (VPN) configuration; firewall policies; a communication protocol; encryption key certificate; or others.

The applications 116 can include any suitable program, module, script, process, or other object that can execute, change, delete, generate, or process information. For example, applications can be implemented as Enterprise Java Beans (EJBs). Design-time components may have the ability to generate run-time implementations into different platforms, such as J2EE (Java 2 Platform, Enterprise Edition), ABAP (Advanced Business Application Programming) objects, or Microsoft's .NET. Further, while illustrated as internal to the device 102, one or more processes associated with the applications 116 may be stored, referenced, or executed remotely. For example, a portion of the applications 116 may be an interface to a web service that is remotely executed. Moreover, the applications 116 may be a child or sub-module of another software module (not illustrated).

The configuration files 118 can include any suitable parameters, variables, policies, algorithms, instructions, settings, or rules for configuring software of the device 102. For example, the configuration files 118 may include a table that identifies settings for one or more applications 116. In some implementations, the configuration files 118 identify initial settings for one or more applications 116, and for other types of applications such as operating system settings. The configuration files 118 may be written in any suitable format, such as, for example, ASCII and line-oriented, etc.

The policies 120 may include any parameters, variables, policies, algorithms, instructions, settings, or rules for enabling or preventing access to resources in one or more perimeters. For example, the policies 120a may identify a resource external to the perimeter 110a that is accessible by a resource inside the perimeter 110a. A policy of a given perimeter may include or otherwise identify the accessibility of the perimeter generally, the accessibility of specific resource in the perimeter, the ability of resources in the perimeter to access other perimeters, and other accessibility information. A policy may specify accessibility by user, action type, time period, or otherwise. In some implementations, a policy may identify specific resources of a perimeter that are accessible to external resources. For example, the policies 120a for the perimeter 110a may indicate that a specific application in another perimeter 110b may or may not access the data or resources in the first perimeter 110a. As another example, the policies 120a for the perimeter 110a may indicate that any of the applications in the other perimeters 110b or 110c may or may not access the data or resources in the first perimeter 110a.

In some implementations, policies 120 may define or otherwise identify a process for user authentication. For example, the policies 120 may identify the type and content of user authentication (e.g., password strength, lifecycle) to apply to a cross-perimeter request. When a user provides a request to access to multiple perimeters, the request may be evaluated by the policies of both perimeters. In some instances, if both policies grant access, then the cross-perimeter request may be granted.

The device 102 may be connected to multiple networks, such as the enterprise network 104a and the other networks 104b. The enterprise network 104a can include a wireless network, a virtual private network, a wired network, or any suitable network. The enterprise can be a corporate or business entity, a government body, a non-profit institution, or another organization. The enterprise may be the device owner 105. The enterprise may also lease the device 102 or may hire contractors or agents who are responsible for maintaining, configuring, controlling, or managing the device 102. The other networks 104b can include any suitable networks that are accessible by a user. For example, the other networks can include a public network that the user has an account for, a private network, an ad hoc network, or another type of network. In some cases, the other networks 104b include a cellular data network. In some cases, the other networks 104b include a user's home network.

The networks 104a and 104b facilitate communication with the device 102. Either of the networks 104a and 104b may communicate, for example, Internet Protocol (IP) packets, Frame Relay frames, Asynchronous Transfer Mode (ATM) cells, voice, video, data, and other suitable information between network addresses. In addition, while the enterprise network 104a and the other networks 104b are each illustrated as a single network, each network may include multiple networks and may provide access to additional networks. In short, the enterprise network 104a and the other networks 104b may include any suitable network configured to communicate with the device 102.

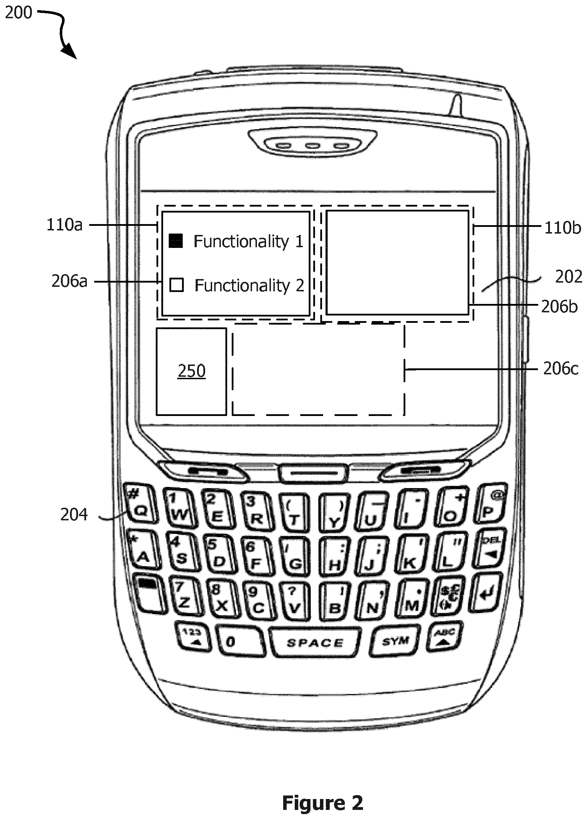

FIG. 2 is a diagram showing an example mobile device 200, which includes a display 202, an optional keyboard 204, and additional features. Multiple applications can be installed on and executed by the device 200. In some implementations, the applications can be installed in a hierarchy of applications, each of which can be assigned to one or more perimeters (for example, perimeters 110a, 110b) included in the device 200. Each application can be executed by the device 200 to collectively provide varying degrees of secure access to data available through the device 200. An application's access to data or execution on the device 200 can depend on a permission setting applied to the application. The permission setting to an application can be based on priority rankings that the device 200 determines for each of multiple management policies defined for the application.

A management policy can include permissions that can be applied to an application. For example, an enterprise policy can permit the application to access only enterprise data. A first user's policy can be a parental policy that may either permit or may not permit execution of the application. A second user's management policy either may or may not be able to override the parental policy. The device's management policy may restrict execution of the application to certain geographical locations, for example. Thus, while the multiple management policies can define multiple permission settings that can be applied to the application, two or more management policies may have conflicting permissions. For example, a parental policy may deny permission to uninstall a device-tracking application even if a user policy grants permission to uninstall the application.

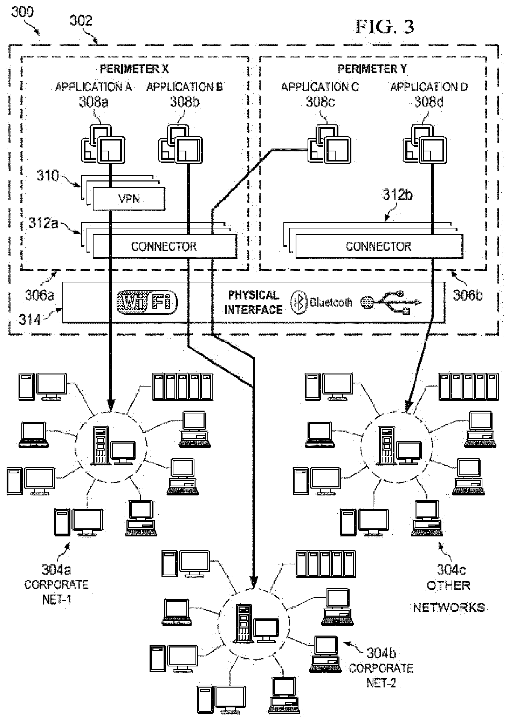

In some implementations, the device 200 can implement a centralized policy engine 250 that can receive the permissions defined by each management policy and determine a priority ranking for each policy. The centralized policy engine 250 can be implemented as computer software instructions executable by the device 200. The engine 250 can be in communication with the device 200, each perimeter included in the device 200, various networks with which the device 200 can communicate including, for example, providers of applications executable by the device 200, data stored on the device 200, and the like. The engine 250 can be included in the device 200 or can be outside the device 200. For example, the engine 250 can be implemented as a computer server system that communicates with the device 200 over one or more of the networks shown in FIG. 3.

In some implementations, a management policy for an application can be defined using the device 200. For example, the device 200 can execute the centralized policy engine 250 to provide one or more perimeter manager interfaces (for example, interfaces 206a, 206b, 206c) showing permissions associated with management policies that can be defined or edited or both. In some implementations, the device 200 can receive input to execute the engine 250. When the device 200 executes the engine 250 in response to the input, the engine 250 can cause the interfaces to be displayed in the display 202. As described below, a user can define permissions associated with an application by selecting functionalities (such as Functionality 1, Functionality 2, and the like) displayed within the perimeter manager interface.

In some implementations, the engine 250 can display a perimeter manager interface within each perimeter included in the device 200 and can additionally display at least one perimeter manager interface outside any of the perimeters included in the device 200. For example, the engine 250 can display the perimeter manager interface 206a within the personal perimeter 110a when a user installs an application on the device 200 (for example, by downloading the application) and assigns the application to the personal perimeter 110a. The engine 250 can display the perimeter manager interface 206a within the personal perimeter 110a automatically upon installing the application. Alternatively, the engine 250 can display the perimeter manager interface 206a upon the first instance of the user launching the application. Within the perimeter manager interface 206a, the engine 250 can display multiple functionalities that collectively define the permissions associated with the application.

The engine 250 can prompt the user of the device 200 to select one or more functionalities displayed in the interface. The displayed functionalities may include those requested by the developer of the application. The device 200 can grant permissions based on the user's selection or selections. For example, the device 200 can grant access to personal data assigned to the personal perimeter 110a if allowed by the user. The device 200 can grant access to enterprise contacts assigned to the enterprise perimeter 110b based on both the user's selections and based on the enterprise's policy of allowing applications to access enterprise contacts. In this manner, the engine 250 can enable the user to select functionalities that define permissions applicable to applications.

The permissions described in the foregoing example can be included in a user management policy. As described above, other management policies can include a vendor management policy, a parental control management policy, an enterprise management policy, a perimeter management policy, and the like. For those management policies with editable functionalities, the engine 250 can provide one or more perimeter manager interfaces to permit a provider of the management policy to select (or de-select) one or more functionalities. In addition, the engine 250 can determine that some of the management policies have fixed (i.e., non-editable) functionalities and responsively may not provide perimeter manager interfaces. A permission setting that is applied to an application that the device 200 executes is determined, at least in part, based on the multiple functionalities of the multiple management policies.

A set of management policies can be assigned specific priority rankings for each application on the device 200, or for each instance of an application running on the device 200. For a given set of management policies, the priority rankings can be different for each application or for each instances of an application.

In some implementations, to apply a permission setting to an application, the engine 250 can determine priority rankings for management policies based on the source or origin of the management policies. For example, the engine 250 may determine that one management policy is the device owner's policy and another management policy is a user's policy, and the engine 250 may assign a higher priority ranking to the device owner's policy. The engine 250 can have an algorithm or configuration file that specifies how management policies are ranked according to the source or origin of each respective management policy. A device owner's management policy can be given a higher priority ranking or a lower priority ranking than a perimeter administrator's management policy, for example, based on the algorithm or configuration. A device owner's management policy can be given a higher priority ranking or a lower priority ranking than a user's management policy, for example, based on the algorithm or configuration. A perimeter administrator's management policy can be given a higher priority ranking or a lower priority ranking than a user's management policy, for example, based on the algorithm or configuration.

In some implementations, to apply a permission setting to an application, the engine 250 can determine priority rankings for management policies based on conflicts between the management policies. For example, if the engine 250 determines that a first management policy is more restrictive than a second management policy, then the engine 250 can assign a higher priority ranking to the second management policy. Alternatively, the engine 250 can assign a higher priority ranking to the first management policy, which is less restrictive relative to the second management policy. In this manner, the engine 250 can rank the multiple management policies from most restrictive to lease restrictive (or vice versa). Accordingly, the engine 250 can apply a permission setting to the application based on the highest ranked or lowest ranked management policy (or based on a policy with an intermediate priority ranking).

In some implementations, to apply a permission setting to an application, the engine 250 can determine the priority rankings for each management policy based in part on data requested by the application. For example, if the application requests data that is enterprise data (i.e., data assigned to the enterprise perimeter 110b), then the engine 250 can assign a highest priority ranking to an enterprise management policy. Similarly, if the application requests network resources that are received over a particular network, then the engine 250 can assign a highest priority ranking to a network management policy.

In some implementations, the engine 250 can determine priority rankings for the multiple management policies at the time of installing the application on the device 200, and can maintain the priority rankings for the duration that the application remains installed on the device 200. Alternatively, the engine 250 can determine priority rankings for the multiple management policies periodically. For example, the engine 250 can determine new priority rankings each time that the application is launched on the device 200. In another example, the engine 250 can determine new priority rankings one or more times within a fixed time period (for example, a day, a week, a month, and the like).

In some implementations, the engine 250 can determine if management policies for the application remain in effect, for example, for each instance of the application being launched. A source of a management policy may have rescinded the policy. In response to determining that a source from which a management policy was received has rescinded the policy, the engine 250 can re-calculate a new priority ranking for each of the remaining management policies.

In some cases, the source of the management policy can alter a permission setting defined for the application. For example, the parental control management policy may define three permission settings for an application: enabled, disabled, and banned. If the device 200 determines that the parental control permission setting for an application is disabled, then the device 200 can perform one or more of preventing the application from launching, shutting down any running instances of the application, visually disabling the application on the home screen, or de-registering the application from the invocation framework. If the application has already been installed, then the device 200 may permit the application to remain on the device 200. The device 200 may also permit the application to be installed on the device 200 but not permit launching the installed application. If, on the other hand, the device 200 determines that the parental control permission setting for an application is banned, then the device 200 can immediately uninstall the application from the device 200 or block future installations of the application on the device (or both). Applications for which the parental control permission setting is enabled are neither disabled nor banned, and consequently have no restrictions.

In some implementations, the engine 250 can detect a change in a management policy and update priority rankings accordingly. For example, when determining a priority ranking for the parental control management policy, the engine 250 can determine that the parental control permission setting is enabled. If the application has no restrictions, the engine 250 can determine a lower priority ranking for the parental control management policy relative to other management policies. Subsequently, the engine 250 can determine that the parental control permission setting has been changed from enabled to disabled. In response, the engine 250 can determine a new priority ranking for the parental control management policy that is greater than when the permission setting for the application was enabled. Similarly, the engine 250 can determine a new priority ranking for the parental control management policy in response to determining that the setting has been changed from enabled to banned. In such instances where a restriction level of a management policy changes based on permission settings, the engine 250 can assign a highest priority ranking to the policy when the permission setting is most restrictive and a lowest priority ranking to the policy when the permission setting is least restrictive.

In some implementations, the management policies are assigned priority rankings independent of the permission settings specified by the individual management policies. For example, the engine 250 may be configured to assign a higher priority ranking to a parental management policy and a lower priority ranking to a user's management policy regardless of whether one of the management policies is more or less restrictive; the engine 250 may be configured to assign a higher priority ranking to a device owner's management policy and a lower priority ranking to a user's management policy regardless of whether one of the management policies is more or less restrictive; the engine 250 may be configured to assign a higher priority ranking to one perimeter's management policy and a lower priority ranking to another perimeter's management policy regardless of whether one of the management policies is more or less restrictive; etc.

In some cases, when one or more of the management policies changes, the priority rankings can remain unchanged. For example, in some cases changing the parental management policy to be more or less restrictive does not affect the priority ranking of the parental management policy for an application. In such cases, although the priority ranking of the parental management policy for an application is unaffected, the permission setting applied to the application may nonetheless be modified in response to the updated parental management policy. For example, if the parental management policy has the highest priority ranking for an application, any change to the parental management policy can affect the permission setting applied to the application.

FIG. 3 is a schematic diagram showing example uses of network resources by a mobile device. The example uses shown in FIG. 3 may occur at different times, or they may occur concurrently. In the example shown, the device 302 is configured to communicate with corporate networks 304a and 304b and a non-corporate network 304c. The corporate networks 304a and 304b can include a virtual private network of an enterprise, a private Wi-Fi network of an enterprise, a wired network of the enterprise, or another network that is administered by the enterprise. The non-corporate network can include, for example, a publicly-accessible Wi-Fi network, a cellular data network, a personal wireless network, or another type of network. Each network with which the device 302 is configured to communicate can define a respective network management policy based on which the device 302 can determine a permission setting for an application that attempts to communicate with the network.

The device 302 includes an enterprise perimeter 306a and a personal perimeter 306b. The enterprise perimeter 306a includes the enterprise applications 308a and 308b, and the personal perimeter 306b includes the personal applications 308c and 308d. The enterprise perimeter 306a includes virtual private network data 310 and enterprise connection data 312a. The personal perimeter includes other connection data 312b. Similarly to each network, each perimeter can also define a respective perimeter management policy based on which the device 302 can determine a permission setting for an application that either executes within the perimeter or that attempts to access data assigned to the perimeter (or both).

The device 302 can access the corporate networks 304a and 304b using the network resources of the enterprise perimeter 306a, and the device can access the non-corporate network 304c using the network resources of the personal perimeter 306b. Each of the networks 304a, 304b, and 304c may, in some cases, provide access to other systems. For example, one or more of the networks 304a, 304b, and 304c may provide Internet access for the device 302. Some networks may only provide access to specific servers, databases, or systems. For example, the corporate network 304a may provide access only to corporate e-mail servers. The device 302 may be connected to any of the networks 304a, 304b, and 304c through any suitable component or components of the physical interface 314. The connection hardware may include, for example, a Wi-Fi connection, a cellular connection, Bluetooth, Universal Serial Bus (USB), Radio Frequency Identification (RFID), Near Field Communication (NFC), or other connection technologies.

The virtual private network data 310 provides secure connectivity with the corporate network 304a. In the example shown in FIG. 3, the virtual private network data 310 are used to route enterprise data traffic for the enterprise application 308a to the corporate network 304a. The enterprise connection data 312a in the enterprise perimeter 306a provides connectivity with the corporate network 304b, and the other connection data 312b in the personal perimeter 306b provides connectivity with other networks 304c. In the example shown in FIG. 3, the enterprise connection data 312a are used to route enterprise data traffic for the enterprise application 308b to the corporate network 304b, and enterprise connection data 312a are also used to route personal data traffic for the personal application 308c to the corporate network 304b.

In some implementations, the connection data 312a and 312b may include encryption information, network settings and information, passwords, certificates, and other data. As described above, each perimeter may include a perimeter management policy for applications and network resources within the perimeter, outside the perimeter, or both. For example, the device 302 can include an enterprise perimeter management policy (*e.g.,* a policy assigned to the enterprise perimeter 306a) that allows corporate applications in the corporate perimeter 306b to access data (*e.g.,* the other connection data 312b, or other data) in the personal perimeter 306b. Management policies that determine permission settings for applications can also be defined by additional entities that communicate with the device 302, for example, an enterprise, one or more users, and the like. In addition, the device 302 itself can define a management policy. Moreover, a source from which an application is received (for example, a provider of the application) can define a management policy that can affect an execution of the application by the device 302 and access to the application by one or more users of the device 302. Consequently, in some implementations, the multiple management policies can include at least two of an enterprise policy, a personal policy, an application policy, a parental policy, or a device policy.

In some situations, management policies from different sources may intersect. For example, a personal perimeter management policy and an enterprise perimeter management policy can each specify respective permissions regarding personal applications (i.e., applications included in the personal perimeter 110a) accessing work contacts included in an enterprise perimeter 110b. If both perimeter management policies permit, then all personal applications can have respective permission settings to access work contacts. A vendor management policy can intersect with the perimeter management policies. For example, if a vendor specifies that only applications provided by the vendor can access data outside of a perimeter in which the application is installed, then the vendor management policy can be ranked higher than the other policies and only those applications that are both provided by the vendor and included in the personal perimeter can access work contacts. However, if a user defines a user management policy that personal applications cannot access data not included in the personal perimeter, then the user management policy may be ranked higher than all other management policies. To the contrary, if the user does not specify such access (for example, as a functionality in the perimeter manager interface), then the user management policy may be ranked lower than the other policies.

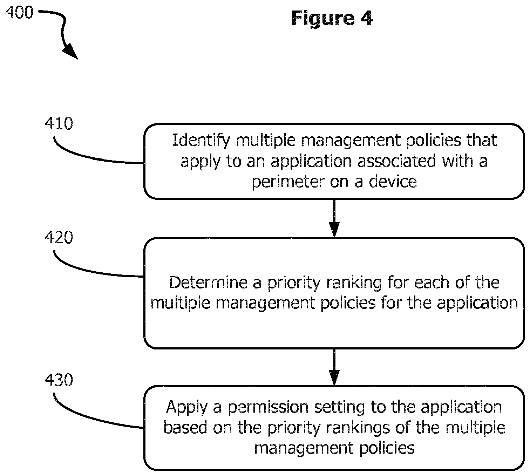

FIG. 4 is a flow chart showing an example process 400 for managing permission settings to applications on a mobile device. The process 400 can be implemented by a user device in a communication system. For example, the process 400 can be implemented by the device 102 shown in FIG. 1, the device 200 shown in FIG. 2, the device 302 shown in FIG. 3, or by another type of system or module. The example process 400 shown in FIG. 4 can be implemented using additional, fewer, or different operations, which can be performed in the order shown or in a different order. In some implementations, one or more of the operations can be repeated or iterated, for example, until a terminating condition is reached.

In some implementations, the device includes a personal perimeter associated with a user of the device. The applications in the personal perimeter may include any suitable applications, for example, calendar, e-mail, games, tools, and the like. A device may include multiple personal perimeters, and each personal perimeter can be associated with the same user, or they may each be associated with different users. For example, multiple users may be authorized to use the device, and each user may have his or her own personal perimeter on the device. Each personal perimeter can be associated with a respective management policy. Alternatively, each user can be associated with a respective management policy, which is also associated with the personal perimeter with which the user is associated.

In some implementations, the user device includes an enterprise perimeter associated with an enterprise (for example, business corporation, partnership, or other enterprise). For example, the enterprise may own the device and assign the device to a particular user. The enterprise perimeter can include any suitable network resources, for example, virtual private network account, Wi-Fi access data, and the like. Such an enterprise may also define and associate a management policy for the device or for the user or both. The management policy that the enterprise defines for the device can be uniform irrespective of the user of the device. Alternatively, the enterprise can define a management policy for each user of the device. An enterprise administrator may setup the device policies or configure the device for enterprise use. In some instances, the user device includes multiple enterprise perimeters. Each enterprise perimeter can be associated with the same enterprise, or they may each be associated with different enterprises. For example, the user may own the device and have perimeters for each enterprise with which he or she is associated.

At 410, the device identifies multiple management policies that apply to an application associated with a perimeter on the device. For example, the device may identify a user's management policy, a device owner's management policy, a parental management policy, an enterprise management policy, one or more perimeter management policies, etc. Some or all of the identified management policies can have different permission or access settings. For example, one of the management policies may permit access to all resources in a specified perimeter, while another of the management policies denies access to specified resources in the same perimeter.

At 420, the device determines, for the application, a priority ranking for each of the multiple management policies. The device determines the priority ranking for at least one of the management policies based on the perimeter with which the application is associated. For example, a user's personal management policy can be assigned a higher ranking when it is applied to applications running in the user's personal perimeter and a lower ranking when it is applied to applications running in another perimeter (e.g., the enterprise perimeter). As another example, a perimeter's management policy can be assigned a higher ranking when it is applied to applications running in that perimeter and a lower ranking when it is applied to applications running outside the perimeter (e.g., in another perimeter).

The priority ranking for a given management policy can be determined based on the source of the management policy. For example, a device owner's management policy can be assigned a higher priority ranking than a device user's management policy. In some cases, multiple management policies have the same priority ranking, or all management policies can be given different priority rankings. The priority ranking for a given management policy can be determined based on the content of the management policy. For example, more restrictive management policies can be assigned a higher or lower priority ranking than less restrictive management policies.

At 430, the device applies a permission setting to the application based on the priority rankings for the multiple management policies. The permission settings applied to the application can be the permission setting of the highest-ranked management policy. The permission settings applied to the application can be a combination of permission settings derived from multiple highly-ranked management policies.

In some cases, the highest-ranked management policy is less restrictive than other management policies that have lower priority rankings. In such cases, the permission settings applied to the application may permit an action that would not be permitted by one or more of the management policies having the lower priority rankings. In some cases, the highest-ranked management policy is more restrictive than other management policies that have lower priority rankings. In such cases, the permission settings applied to the application may prohibit an action that would not be permitted by one or more of the management policies having the lower priority rankings.

In some aspects of what is described here, an unlimited number of authorized policy providers provide policy decisions for a device. The device can sort or triage among the relevancy and relative priority of these policy providers in different contexts.

In some aspects of what is described here, multiple management policies that apply to an application associated with a perimeter on a device are identified. A priority ranking for each management policy is determined for the application based on the perimeter with which the application is associated. A permission setting based on the priority rankings is applied to the application.

Implementations of these and other aspects may include one or more of the following features. The multiple management policies can include at least two of: an enterprise policy, a personal policy, an application policy, a parental policy, or a device policy. The multiple management policies can include a first management policy and a second management policy. Applying the permission setting to the application based on the priority rankings for the multiple management policies can include determining that the first management policy conflicts with the second management policy, and applying the second management policy in response to determining that the second management policy has a higher priority ranking than the first management policy. The permission settings can be based on a management policy having the highest priority ranking. The management policy having the highest priority ranking can be the most restrictive management policy of the multiple management policies. The management policy having the highest priority ranking can be the least restrictive management policy of the multiple management policies. The priority ranking for each of the multiple management policies can be determined based in part on data requested by the application. The priority rankings can be determined for an instance of the application being launched on the device. New priority rankings can be re-determined for each new instance of the application being launched on the device. The multiple management policies can be received from one or more sources. It can be determined that a source from which a management policy was received has rescinded the management policy. In response to determining that the source has rescinded the management policy, a new priority ranking can be calculated for each of the remaining management policies. A perimeter manager interface can be provided on the device. In the perimeter manager interface, functionalities for editing a management policy can be provided.

A number of implementations have been described. Nevertheless, it will be understood that various modifications may be made. Other variations in the order of steps are also possible. Accordingly, other implementations are within the scope of the following claims.

## Claims

1. A computer-implemented method (400) comprising:
identifying (410) a plurality of management policies that apply to an application (308a, 308b, 308c, 308d) associated with a perimeter (306a, 306b) of a plurality of perimeters on a device (302), wherein at least two of the plurality of management policies have different permission settings;
determining (420), for the application, a priority ranking for each of the plurality of management policies, wherein the priority ranking for at least one of the management policies is determined based on the perimeter (306a, 306b) with which the application (308a, 308b, 308c, 308d) is associated; and
applying (430) a permission setting to the application (308a, 308b, 308c, 308d) based on the priority rankings for the plurality of management policies.

2. The method of claim 1, wherein the plurality of management policies includes at least two of: an enterprise policy, a personal policy, an application policy, a parental policy, or a device policy.

3. The method of claim 1 or 2, wherein the plurality of management policies includes at least two management policies provided by different policy providers.

4. The method of any preceding claim, wherein the plurality of management policies includes a first management policy and a second management policy, and applying the permission setting to the application based on the priority rankings for the plurality of management policies includes:
determining that the first management policy conflicts with the second management policy; and
applying the second management policy in response to determining that the second management policy has a higher priority ranking than the first management policy.

5. The method of any preceding claim, wherein the permission setting is based on a management policy having the highest priority ranking.

6. The method of claim 5, wherein the management policy having the highest priority ranking is the most restrictive management policy of the plurality of management policies.

7. The method of claim 5, wherein the management policy having the highest priority ranking is the least restrictive management policy of the plurality of management policies.

8. The method of any preceding claim, further comprising determining the priority ranking for each of the plurality of management policies based in part on data requested by the application (308a, 308b, 308c, 308d).

9. The method of any preceding claim, wherein the priority rankings are determined for an instance of the application being launched on the device (302), and new priority rankings are re-determined for each new instance of the application being launched on the device (302).

10. The method of any preceding claim, wherein the plurality of management policies are received from one or more sources, and wherein the method further comprises:
determining that a source from which a management policy was received has rescinded the management policy; and
in response to determining that the source has rescinded the management policy, re-calculating a new priority ranking for each of remaining management policies.

11. The method of any preceding claim, further comprising:
providing, on the device, a perimeter manager interface (206a, 206b, 206c); and
providing, in the perimeter manager interface (206a, 206b, 206c), functionalities for editing a management policy.

12. A device (302) comprising:
data processing apparatus; and
a computer-readable medium storing instructions executable by the data processing apparatus to perform the method of any of claims 1 to 11.

13. A computer-readable medium storing instructions executable by data processing apparatus to perform the method of any of claims 1 to 11.

## Patentansprüche

1. Computerimplementiertes Verfahren (400), umfassend:
Identifizieren (410) einer Vielzahl von Verwaltungsrichtlinien, die für eine Anwendung (308a, 308b, 308c, 308d) gelten, die einem Perimeter (306a, 306b) einer Vielzahl von Perimetern auf einer Vorrichtung (302) zugeordnet ist, wobei mindestens zwei der Vielzahl von Verwaltungsrichtlinien unterschiedliche Berechtigungseinstellungen aufweisen;
Bestimmen (420) einer Prioritätsrangfolge für jede der Vielzahl von Verwaltungsrichtlinien für die Anwendung, wobei die Prioritätsrangfolge für mindestens eine der Verwaltungsrichtlinien basierend auf dem Perimeter (306a, 306b) bestimmt wird, dem die Anwendung (308a, 308b, 308c, 308d) zugeordnet ist; und
Anwenden (430) einer Berechtigungseinstellung auf die Anwendung (308a, 308b, 308c, 308d) basierend auf den Prioritätsrangfolgen für die Vielzahl von Verwaltungsrichtlinien.

2. Das Verfahren gemäß Anspruch 1, wobei die Vielzahl von Verwaltungsrichtlinien mindestens zwei von den Folgenden beinhaltet: eine Unternehmensrichtlinie, eine persönliche Richtlinie, eine Anwendungsrichtlinie, eine elterliche Richtlinie oder eine Vorrichtungsrichtlinie.

3. Das Verfahren gemäß Anspruch 1 oder 2, wobei die Vielzahl von Verwaltungsrichtlinien mindestens zwei Verwaltungsrichtlinien beinhaltet, die von verschiedenen Richtlinienanbietern bereitgestellt werden.

4. Das Verfahren eines beliebigen vorhergehenden Anspruchs, wobei die Vielzahl von Verwaltungsrichtlinien eine erste Verwaltungsrichtlinie und eine zweite Verwaltungsrichtlinie beinhaltet, und das Anwenden der Berechtigungseinstellung auf die Anwendung basierend auf den Prioritätsranglisten für die Vielzahl von Verwaltungsrichtlinien folgendes umfasst:
Bestimmen, dass die erste Verwaltungsrichtlinie mit der zweiten Verwaltungsrichtlinie in Konflikt steht; und
Anwenden der zweiten Verwaltungsrichtlinie als Reaktion auf die Feststellung, dass die zweite Verwaltungsrichtlinie eine höhere Priorität hat als die erste Verwaltungsrichtlinie.

5. Das Verfahren eines beliebigen vorhergehenden Anspruchs, worin die Berechtigungseinstellung auf einer Verwaltungsrichtlinie mit der höchsten Priorität basiert.

6. Das Verfahren gemäß Anspruch 5, wobei die Verwaltungsrichtlinie mit der höchsten Priorität die restriktivste Verwaltungsrichtlinie aus der Vielzahl der Verwaltungsrichtlinien ist.

7. Das Verfahren gemäß Anspruch 5, wobei die Verwaltungsrichtlinie mit der höchsten Priorität die am wenigsten restriktive Verwaltungsrichtlinie aus der Vielzahl der Verwaltungsrichtlinien ist.

8. Das Verfahren eines beliebigen vorhergehenden Anspruchs, ferner umfassend das Bestimmen der Prioritätsrangfolge für jede der Vielzahl von Verwaltungsrichtlinien, die teilweise auf von der Anwendung angeforderten Daten (308a, 308b, 308c, 308d) basieren.

9. Das Verfahren eines beliebigen vorhergehenden Anspruchs, wobei die Prioritätsrangfolgen für einen Fall der auf der Vorrichtung (302) gestarteten Anwendung bestimmt werden und neue Prioritätsrangfolgen für jeden neuen Fall der auf der Vorrichtung (302) gestarteten Anwendung neu bestimmt werden.

10. Das Verfahren eines beliebigen vorhergehenden Anspruchs, wobei die Vielzahl von Verwaltungsrichtlinien von einer oder mehreren Quellen empfangen wird, und wobei das Verfahren ferner umfasst:
Bestimmen, ob eine Quelle, von der eine Verwaltungsrichtlinie erhalten wurde, die Verwaltungsrichtlinie aufgehoben hat; und
als Reaktion auf das Bestimmen, dass die Quelle die Verwaltungsrichtlinie aufgehoben hat, Neuberechnen einer neuen Prioritätsrangordnung für jede der verbleibenden Verwaltungsrichtlinien.

11. Das Verfahren eines beliebigen vorhergehenden Anspruchs, ferner umfassend:
Bereitstellen einer Perimeter-Manager-Schnittstelle (206a, 206b, 206c) auf der Vorrichtung; und
Bereitstellen von Funktionalitäten zum Bearbeiten einer Verwaltungsrichtlinie in der Perimeter-Manager-Schnittstelle (206a, 206b, 206c).

12. Eine Vorrichtung (302), umfassend:
eine Datenverarbeitungsvorrichtung; und
ein computerlesbares Medium, das Anweisungen speichert, die von der Datenverarbeitungsvorrichtung ausführbar sind, um das Verfahren nach einem der Ansprüche 1 bis 11 durchzuführen.

13. Computerlesbares Medium, das Anweisungen speichert, die von einer Datenverarbeitungsvorrichtung ausgeführt werden können, um das Verfahren nach einem der Ansprüche 1 bis 11 durchzuführen.

## Revendications

1. Procédé mis en oeuvre par ordinateur (400) comprenant :
l'identification (410) d'une pluralité de politiques de gestion qui s'appliquent à une application (308a, 308b, 308c, 308d) associée à un périmètre (306a, 306b) d'une pluralité de périmètres sur un dispositif (302), où au moins deux de la pluralité de politiques de gestion ont des réglages de permission différents ;
la détermination (420), pour l'application, d'un classement de priorité pour chacune de la pluralité de politiques de gestion, où le classement de priorité pour au moins l'une des politiques de gestion est déterminé sur la base du périmètre (306a, 306b) auquel l'application (308a, 308b, 308c, 308d) est associée ; et
l'application (430) d'un réglage de permission à l'application (308a, 308b, 308c, 308d) sur la base des classements de priorité pour la pluralité de politiques de gestion.

2. Procédé selon la revendication 1, dans lequel la pluralité de politiques de gestion inclut au moins deux parmi : une politique d'entreprise, une politique personnelle, une politique d'application, une politique parentale, ou une politique de dispositif.

3. Procédé selon la revendication 1 ou 2, dans lequel la pluralité de politiques de gestion inclut au moins deux politiques de gestion fournies par des fournisseurs de politique différents.

4. Procédé selon l'une quelconque des revendications précédentes, dans lequel la pluralité de politiques de gestion inclut une première politique de gestion et une seconde politique de gestion, et l'application du réglage de permission à l'application sur la base des classements de priorité pour la pluralité de politiques de gestion inclut :
la détermination que la première gestion la politique est en conflit avec la seconde politique de gestion ; et
l'application de la seconde politique de gestion en réponse à la détermination que la seconde politique de gestion a un classement de priorité supérieur à celui de la première politique de gestion.

5. Procédé selon l'une quelconque des revendications précédentes, dans lequel le réglage de permission est basé sur une politique de gestion ayant le classement de priorité le plus élevé.

6. Procédé selon la revendication 5, dans lequel la politique de gestion ayant le classement de priorité le plus élevé est la politique de gestion la plus restrictive de la pluralité de politiques de gestion.

7. Procédé selon la revendication 5, dans lequel la politique de gestion ayant le classement de priorité le plus élevé est la politique de gestion la moins restrictive de la pluralité de politiques de gestion.

8. Procédé selon l'une quelconque des revendications précédentes, comprenant en outre la détermination du classement de priorité pour chacune de la pluralité de politiques de gestion sur la base, en partie, de données demandées par l'application (308a, 308b, 308c, 308d).

9. Procédé selon l'une quelconque des revendications précédentes, dans lequel les classements de priorité sont déterminés pour une instance de l'application qui est lancée sur le dispositif (302), et de nouveaux classements de priorité sont re-déterminés pour chaque nouvelle instance de l'application qui est lancée sur le dispositif (302).

10. Procédé selon l'une quelconque des revendications précédentes, dans lequel la pluralité de politiques de gestion sont reçues en provenance d'une ou plusieurs sources, et où le procédé comprend en outre :
la détermination qu'une source en provenance de laquelle une politique de gestion a été reçue a rescindé la politique de gestion ; et
en réponse à la détermination que la source a rescindé la politique de gestion, le re-calcul d'un nouveau classement de priorité pour chacune des politiques de gestion restantes.

11. Procédé selon l'une quelconque des revendications précédentes, comprenant en outre :
la fourniture, sur le dispositif, d'une interface de gestionnaire de périmètre (206a, 206b, 206c) ; et
la fourniture, dans l'interface de gestionnaire de périmètre (206a, 206b, 206c), de fonctionnalités pour éditer une politique de gestion.

12. Dispositif (302) comprenant :
un appareil de traitement de données ; et
un support lisible par ordinateur stockant des instructions exécutables par l'appareil de traitement de données pour effectuer le procédé selon l'une quelconque des revendications 1 à 11.

13. Support lisible par ordinateur stockant des instructions exécutables par un appareil de traitement de données pour effectuer le procédé selon l'une quelconque des revendications 1 à 11.
